Europäisches Patentamt

European Patent Office

Office européen des brevets

(11) Veröffentlichungsnummer: **0 223 147**
**B1**

(12) **EUROPÄISCHE PATENTSCHRIFT**

(45) Veröffentlichungstag der Patentschrift:
07.03.90

(21) Anmeldenummer: 86115251.0

(22) Anmeldetag: 04.11.86

(51) Int. Cl.⁴: **F16B 7/18**
**// E01D19/00**

54 Schraubverbindung zum Verbinden eines Hohlprofils mit einem quer dazu angebrachten Profil.

(30) Priorität: 15.11.85 DE 3540604

(43) Veröffentlichungstag der Anmeldung:
27.05.87 Patentblatt 87/22

(45) Bekanntmachung des Hinweises auf die Patenterteilung:
07.03.90 Patentblatt 90/10

(84) Benannte Vertragsstaaten:
AT BE CH DE ES FR GB GR IT LI LU NL SE

(56) Entgegenhaltungen:
FR-A- 1 475 039
FR-A- 2 221 026
US-A- 3 864 051
US-A- 4 286 891

(73) Patentinhaber: **Alten, Kurt, Ringstrasse 14,
D-3015 Wennigsen(DE)**

(72) Erfinder: **Alten, Kurt, Ringstrasse 14,
D-3015 Wennigsen(DE)**

(74) Vertreter: **Depmeyer, Lothar, Auf der Höchte 30,
D-3008 Garbsen 1(DE)**

## Beschreibung

Die Erfindung betrifft eine Verbindungsvorrichtung enthaltend ein Hohlprofil, ein quer dazu angeordnetes Profil und eine Schraubverbindung zum Verbinden dieser Profile, wobei sich eine biegsteife Lasche mit einer gegenüber dem lichten Innenmass des Hohlprofils grösseren Länge mit einem Ende an einem in der Innenfläche des Hohlprofils liegenden Anschlag anliegt und eine an der Lasche und dem Profil angreifende Schraube die gegenüber der dem Anschlag gegenüberliegenden Innenfläche des Hohlprofils steil ansteigende Lasche gegen den Anschlag anzieht.

Bei den bekannten Verbindungsvorrichtungen dieser Art (US-A-4 286 891 ) sind die beiden Enden der Lasche als Zapfen ausgeführt, die in deren Querschnitt entsprechende Ausnehmungen in der Wandung des Hohlprofils eingreifen. Dadurch wird zwar die Lasche ausreichend sicher gehalten, jedoch sind die hierzu erforderlichen Vorkehrungen an der Lasche und dem Hohlprofil aufwendig und kompliziert.

Aufgrund der Erfindung soll demgegenüber eine Verbindungsvorrichtung der eingangs erwähnten Art vorgeschlagen werden, die einfach auszuführen und zudem sicher und widerstandsfähig ist in der Weise, dass nur schwierig durch Schweissen oder ähnliche Verbindungsarten miteinander zu verbindende Metallprofile dauerhaft zusammengefügt werden können.

Diese Aufgabe wird erfindungsgemäss durch die Merkmale nach dem Kennzeichnungsteil des Patentanspruchs 1 gelöst. Eine vorteilhafte Ausgestaltung der Erfindung ergibt sich aus den Unteransprüchen.

Um die erwähnte Verschraubung auch betätigen, die Mutter der Schraube also anziehen zu können, wird ein unten offenes Hohlprofil vorgesehen, dessen nach unten gerichtete Schenkel allerdings nach innen abgewinkelt sind. Somit ist die Verschraubung von unten her zugänglich.

Insb. soll diese Schraubverbindung bei brückenartigen Konstruktionen Anwendung finden. In diesem Fall ist das eine Profil das Längsprofil, während das Hohlprofil in Verbindung mit weiteren Hohlprofilen quer dazu verläuft, um die zum Begehen oder Befahren dienende Fläche zu bilden. Das Längsprofil kann dabei ebenfalls ein Hohlprofil sein, wie auch bei anderen Anwendungen; das quer dazu gerichtete Profil ist aber ein hohl gehaltenes bzw. ein Profil, dessen nach unten gerichtete Schenkel nach innen abgewinkelt sind.

Weitere Einzelheiten der Erfindung werden anhand der Zeichnung erläutert, in der ein Ausführungsbeispiel der Erfindung dargestellt ist.

Es zeigen :

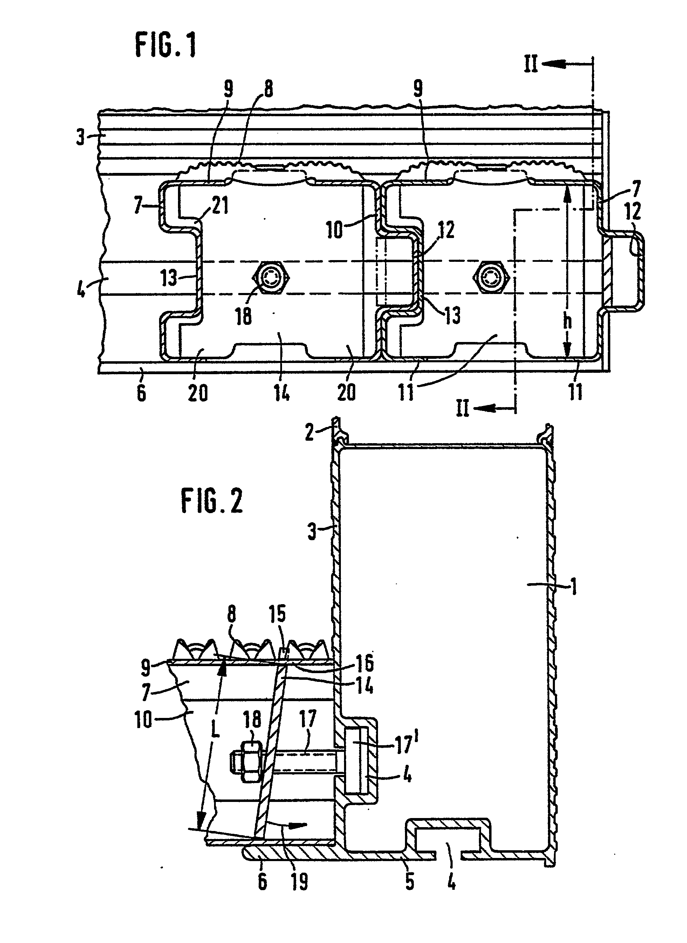

Fig. 1 einen Teillängsschnitt durch eine rampenartige Überfahrbrücke, die ggfs. auch verfahrbar sein kann, und
Fig. 2 einen Schnitt nach der Linie II - II von Fig. 1.

Die Überfahrbrücke weist an beiden Rändern, also beidseitig einen durchlaufenden Träger 1 auf, der als Kastenprofil ausgeführt ist und nach oben hin ggfs. erweitert sein kann, wie dies bei 2 dargestellt ist. Die der Wirkfläche der Brücke zugekehrte Seitenwand 3 des Trägers 1 hat im unteren Bereich eine hinterschnittene, nutartige Vertiefung 4, die auch an der Bodenwand 5 angeordnet sein kann, für diese Betrachtung aber keine Bedeutung hat. In Verlängerung der Bodenwand 5 des im Querschnitt etwa rechteckigen Hohlträgers 1 befindet sich ein leistenförmiger Vorsprung 6, der gegenüber den anderen Wandungen verstärkt ausgeführt ist. Im übrigen besteht dieser Träger 1 aus Aluminium; er ist als Strangpressprofil ausgeführt.

Mit diesem Träger 1 sollen quer zur Fahrbahn verlaufende Hohlprofile 7 verbunden werden in der Weise, dass sie die eigentliche aufgeraute Fahrbahn 8 und die Verbindung zwischen den beiden Trägern 1 herstellen. Der oben gelegene Steg des Hohlprofils 7 ist mit 9 bezeichnet. Die beiden davon heruntergeführten Schenkel 10 sind unten nach innen abgewinkelt, um so einen unten offenen Hohlträger zu bilden. Die waagerechten Abwinkelungen sind mit 11 bezeichnet.

Die beiden Schenkel 10 sind zudem in eine Querrichtung ausgewinkelt um einen etwa rechteckigen Vorsprung 12 nach aussen und eine rechteckige Ausnehmung 13 nach innen zu bilden. Diese Formgebungen haben die Aufgabe, benachbarte Hohlprofile 7 seitlich ineinander bzw. formschlüssig miteinander verbinden zu können. Innerhalb des Hohlprofils 7 befindet sich nun eine biegesteife Lasche 14, deren wirksame Länge L geringfügig grösser ist als die lichte Höhe h des Hohlprofils 7. Am oberen Laschenende durchsetzt die Lasche mit einem kleinen Vorsprung 15 Steg 9. Dort liegt die Lasche 14 mit ihrem Vorsprung 15 an einem Widerlager 16 des Steges 9 an.

In die Vertiefung 4 greift der Hammerkopf 17' einer Schraube 17 mit Mutter 18 ein. Die Schraube durchsetzt die Lasche 14, um so durch Anziehen der Mutter 18 die Lasche 14 in Richtung des Pfeiles 19 bzw. mit ihrem unteren Ende ich Richtung auf die Seitenwand 3 anziehen zu können, womit dann eine feste Verbindung zwischen dem Hohlprofil 7 und den Trägern 1 entsteht und zugleich auch eine Anpressung der Abwinkelungen 11 gegen den Vorsprung 6 erfolgt. Mit dem Anziehen der Schraube 17 stützt sich die Lasche 14 mit seitlichen Füssen 20 auf den Abwinkelungen 11 ab. Es sei noch erwähnt, dass die Lasche 14 seitliche Ausnehmungen 21 hat, in die Vorsprünge 12 hineinragen.

Es versteht sich, dass die in der Zeichnung wiedergegebene Klemmlage der Lasche 14 unter der Einwirkung der Schraube 17 eine ausreichende Steifigkeit der Lasche 14 voraussetzt. Dabei versteht es sich weiter, dass beim Anziehen der Mutter 18 die Lasche 14 am unteren Ende kleine Gleitbewegungen auf den Abwinkelungen 11 ausführen kann, um so eine sichere Verspannung herbeiführen zu können. Im übrigen ist die Neigung der Lasche 14 nur gering. Sie beträgt etwa 10 - 20° ( Neigung gemessen gegenüber der Senkrechten ).

## Patentansprüche

1. Verbindungsvorrichtung enthaltend ein Hohlprofil (7), ein quer dazu angeordnetes Profil (1) und eine Schraubverbindung zum Verbinden dieser Profile, wobei sich eine biegesteife Lasche (14) mit einer gegenüber dem lichten Innenmaß (h) des Hohlprofils (7) größeren Länge (L) mit einem Ende an einem in der Innenfläche des Hohlprofils (7) liegenden Anschlag (16) anliegt und eine an der Lasche (14) und dem Profil (1) angreifende Schraube (17) die gegenüber der dem Anschlag (16) gegenüberliegenden Innenfläche des Hohlprofils (7) steil ansteigende Lasche (14) gegen den Anschlag (16) anzieht, dadurch gekennzeichnet, daß das andere Ende der Lasche (14) in Richtung auf das Profil (1) an der dem Anschlag (16) gegenüberliegenden Innenfläche des Hohlprofils (7) verschiebbar angeordnet ist.

2. Verbindungsvorrichtung nach Anspruch 1, dadurch gekennzeichnet, daß die Lasche (14) in bezug auf eine zur Innenfläche Senkrechten einen Winkel von etwa 10–20° beschreibt.

3. Verbindungsvorrichtung nach Anspruch 1, dadurch gekennzeichnet, daß der Anschlag (16) oben gegenüber der Senkrechten und das verschiebbare Ende der Lasche (14) unten liegt.

4. Verbindungsvorrichtung nach Anspruch 1, dadurch gekennzeichnet, daß die Lasche (14) an ihrem dem Anschlag (16) zugekehrten Ende einen Vorsprung (15) aufweist, der eine Wandung des Hohlprofils (7) durchsetzt, an deren Innenfläche das Ende der Lasche (14) anliegt.

5. Verbindungsvorrichtung nach Anspruch 1, dadurch gekennzeichnet, daß das Hohlprofil (7) auf einem Vorsprung (6) des Profils (1) aufliegt.

6. Verbindungsvorrichtung nach Anspruch 1, dadurch gekennzeichnet, daß das Profil (1) eine längsverlaufende, hinterschnittene Vertiefung (4) hat, in der eine hammerkopfartige Verbreiterung (17') der Schraube (17) angeordnet ist.

7. Verbindungsvorrichtung nach Anspruch 1, dadurch gekennzeichnet, daß mehrere Hohlprofile (7) sich einander berührend mit dem Profil (1) verbunden sind, deren einander zugekehrte Wandungen formschlüssig ineinandergreifen.

## Claims

1. Connection means, comprising a hollow profile (7), a profile (1) which is disposed transversely relative thereto, and a screw connection for connecting these profiles, wherein a cover plate (14), which is rigid and has a length (L) greater than the inside dimension (h) of the hollowh profile (7), abuts with one end against a stop member (16), which is situated in the inside surface of the hollow profile (7), and a screw (17), which co-operates with the cover plate (14) and the profile (1), draws the cover plate (14) towards the stop member (16), said cover plate sloping steeply relative to the inside surface of the hollow profile (7) situated opposite the stop member (16), characterised in that the other end of the cover plate (14) is disposed so as to be displaceable in the direction towards the profile (1) on the inside surface of the hollow profile (7) situated opposite the stop member (16).

2. Connection means according to claim 1, characterised in that the cover plate (14) describes an angle of substantially 10–20° with respect to a line extending vertically relative to the inside surface.

3. Connection means according to claim 1, characterised in that the stop member (16) is situated at the upper end relative to the vertical line, and the displaceable end of the cover plate (14) is situated at the lower end.

4. Connection means according to claim 1, characterised in that the cover plate (14) has, at its end facing the stop member (16), a projection member (15) which extends through a wall of the hollow profile (7), the end of the cover plate (14) abutting against the inside surface of said wall.

5. Connection means according to claim 1, characterised in that the hollow profile (7) is situated on an extension (6) of the profile (1).

6. Connection means according to claim 1, characterised in that the profile (1) is provided with a longitudinally extending, undercut recess (4), which accommodates a widened portion (17') of the screw (17), which is shaped like a hammer head.

7. Connection means according to claim 1, characterised in that a plurality of hollow profiles (7) are connected to the profile (1) so as to be in contact with one another, the walls of said hollow profiles which face one another engaging in one another in an interlocking manner.

## Revendications

1. Dispositif de liaison, comprenant un profilé creux (7), un profilé (1) disposé transversalement à celui-ci et une liaison par boulonnage pour relier ces profilés, une plaque (14), résistante à la flexion et d'une longueur (L) plus grande que la dimension intérieure (h) du profilé creux (7), étant appliquée par une extrémité à une butée (16) située sur la surface intérieure du profilé creux (7) et un boulon (17), attaquant la plaque (14) et le profilé (1) et amenant contre la butée (16) la plaque (14), montant de manière abrupte par rapport à la surface intérieure du profilé creux (7), qui est opposée à la butée (16), caractérisé en ce que l'autre extrémité de la plaque (14) est montée coulissante en direction du profilé (1) sur la surface intérieure du profilé creux (7), qui est opposée à la butée (16).

2. Dispositif de liaison suivant la revendication 1, caractérisé en ce que la plaque (14) fait, avec une perpendiculaire à la surface intérieure, un angle de 10 à 20° environ.

3. Dispositif de liaison suivant la revendication 1, caractérisé en ce que la butée (16) est en haut, par rapport à la perpendiculaire, et l'extrémité coulissante de la plaque (14) est en bas.

4. Dispositif de liaison suivant la revendication 1, caractérisé en ce que la plaque (14) comporte, à son extrémité tournée vers la butée (16), une partie saillante (15) qui traverse une paroi du profilé creux (7), paroi sur la surface intérieure de laquelle s'applique l'extrémité de la plaque (14).

5. Dispositif de liaison suivant la revendication 1, caractérisé en ce que le profilé creux (7) repose sur une partie saillante (6) du profilé (1).

6. Dispositif de liaison suivant la revendication 1, caractérisé en ce que le profilé (1) a un évidement (4) s'étendant longitudinalement et en contre-dépouille, dans lequel est disposée une partie élargie (17') en forme de tête de marteau du boulon (17).

7. Dispositif de liaison suivant la revendication 1, caractérisé en ce que plusieurs profilés creux (7) sont reliés les uns aux autres en étant en contact avec le profilé (1), leurs parois tournées les unes vers les autres s'emboîtant par complémentarité de formes.

FIG.1

FIG.2